Europäisches Patentamt

European Patent Office

Office européen des brevets

(11) Veröffentlichungsnummer: **0 265 747 B1**

# (12) EUROPÄISCHE PATENTSCHRIFT

(45) Veröffentlichungstag der Patentschrift: **01.04.92**

(21) Anmeldenummer: **87114824.3**

(22) Anmeldetag: **10.10.87**

(51) Int. Cl.⁵: **B60R 22/26**

(54) **Fahrzeugsitz mit einer Längsführung, mit einer Höhen- oder Neigungsverstellung und mit einer Gurtschlossbefestigung.**

(30) Priorität: **29.10.86 DE 8628855 U**

(43) Veröffentlichungstag der Anmeldung:
**04.05.88 Patentblatt 88/18**

(45) Bekanntmachung des Hinweises auf die
Patenterteilung:
**01.04.92 Patentblatt 92/14**

(84) Benannte Vertragsstaaten:
**DE ES FR GB IT SE**

(56) Entgegenhaltungen:
**DE-A- 2 800 261      DE-A- 3 243 550**
**FR-A- 2 414 927      FR-A- 2 429 125**
**FR-A- 2 525 907      US-A- 4 239 260**

(73) Patentinhaber: **C. Rob. Hammerstein GmbH**
**Postfach 13 01 18 Merscheiderstrasse 167**
**W-5650 Solingen 13(DE)**

Patentinhaber: **Firma Daimler-Benz AG**
**Postfach**
**W-7000 Stuttgart 60(DE)**

(72) Erfinder: **Bauer, Heinz**
**Hammerstrasse 9**
**W-5650 Solingen 11(DE)**

Erfinder: **Becker, Burckhard, Dipl.-Ing.**
**Obenkatternberg 25**
**W-5650 Solingen 1(DE)**
Erfinder: **Frohnhaus, Ernst-Reiner**
**Hammerstrasse 13**
**W-5650 Solingen 11(DE)**
Erfinder: **Gedig, Alfred, Dipl.-Ing.**
**Hammerstrasse 28**
**W-5650 Solingen 11(DE)**
Erfinder: **Klink, Josef, Dipl.-Ing.**
**Im Kranich 5**
**W-7270 Nagold(DE)**
Erfinder: **Koucky, Antonin**
**Ernst-Barlach-Strasse 81**
**W-7032 Sindelfinden(DE)**

(74) Vertreter: **Bauer, Wulf, Dr.**
**Wolfgang-Müller-Strasse 12**
**W-5000 Köln 51 (Marienburg)(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf einen Fahrzeugsitz nach dem Oberbegriff des Patentanspruchs 1.

Bei dem aus der DE-A-28 00 261 vorbekannten Fahrzeugsitz dieser Art ist der untere Endbereich des ersten Teils der Gurtschloßbefestigung in einer Sperrschiene verschiebbar geführt, wobei letztere parallel zur Längsführung verläuft und eine Verzahnung hat. Die Einrichtung zur Höhen-und Neigungsverstellung befindet sich neben dieser Sperrschiene, unterhalb der Längsführung. Das zweite Teil der Gurtschloßbefestigung ist mit dem Sitzrahmen fest verbunden. Die Sperrschiene ist an der Bodengruppe des zugehörigen Fahrzeugs befestigt, die Einleitung der Gurtzugkräfte erfolgt damit unmittelbar in die Bodengruppe.

Bei diesem vorbekannten Fahrzeugsitz ist der Aufbau der Gurtschloßbefestigung relativ aufwendig, die Gurtschloßbefestigung setzt sich aus einer größeren Anzahl von einzelnen Teilen zusammen. Dies ist nachteilig hinsichtlich Montage, Wartung, praktischem Gebrauch, Kosten und auch in Bezug auf das Gewicht.

Aufgabe der Erfindung ist eine Verbesserung des vorbekannten Fahrzeugsitzes unter Vereinfachung der Montage und Wartung, und eine Verringerung des Gewichts unter Beibehaltung der gleichbleibenden Winkelstellung des Gurtschlosses zum Sitzträger.

Diese Aufgabe wird gelöst durch den Fahrzeugsitz mit den Merkmalen des Patentanspruchs 1. Weiterbildungen finden sich in den Unteransprüchen.

Die Erfindung lehrt also, das Gurtschloß am Sitzträger anzulenken und über die Gurtschloßbefestigung unfallbedingte Gurtzugkräfte in die Sitzschiene einzuleiten, wo das erste Teil der Gurtschloßbefestigung angelenkt ist. Die Gurtschloßbefestigung, die in bekannter Weise aus dem ersten und zweiten, gegeneinander verschiebbaren Teil ausgebildet ist, nimmt Relativbewegungen der Sitzfläche bei Höhen- oder Neigungseinstellung auf. Die Erfindung lehrt dabei, das Gurtschloß über das zweite Teil am Sitzträger anzulenken so daß die Position des Gurtschlosses gegenüber dem Sitzträger weitgehend oder völlig konstant bleibt.

Die erfindungsgemäße Vorrichtung behält die Vorteile einer an der Sitzschiene verankerten Gurtschloßbefestigung bei: Eine Bewegung des Fahrzeugsitzes gegenüber der Bodengruppe innerhalb der Längsführung verändert die Position der Gurtschloßbefestigung und des Gurtschlosses nicht.

Vorzugsweise verläuft die Gurtschloßbefestigung im wesentlichen rechtwinklig zu den Schienen der Längsführung. Der Verschiebeweg zwischen dem oberen und dem unteren Teil kann dadurch relativ klein gewählt werden. Zudem ergibt sich die schon erwähnte, relativ kleine Bauform. Die Gurtschloßbefestigung kann mit geringem Eigengewicht ausgebildet werden. Verletzungen bei Relativbewegungen der beiden Teile gegeneinander oder der gesamten Gurtschloßbefestigung gegenüber dem Sitz sind praktisch ausgeschlossen, insbesondere wenn die Gurtschloßbefestigung durch eine Umhüllung abgedeckt ist.

In Weiterbildung der Erfindung wird vorgeschlagen, daß in der Führung des einen Teils ein Endanschlag ausgebildet ist, der eine maximale Entfernung der beiden Teile voneinander festgelegt. Er verhindert, daß die beiden Teile sich voneinander lösen können, wenn der unfallbedingt auftretende Eingriff zwischen Rastvorsprung und Rastmittel nicht oder nicht ausreichend funktioniert und hält die beiden Teile der Gurtschloßbefestigung unverlierbar zusammen.

In besonders bevorzugter Ausbildung wird vorgeschlagen, den am Sitzträger angelenkten, oberen Arm der Gurtschloßbefestigung mittels eines Sicherungsstücks am Sitzträger festzulegen. Das so am Sitzträger fixierte obere Teil ist erfindungsgemäß mit dem Gurtschloß verbunden, das somit direkt am Sitzträger fixiert ist und damit dessen Bewegungen folgt.

In einer bevorzugten Weiterbildung der Erfindung wird vorgeschlagen, den Sitzträger über eine mit ihm gelenkverbundene Schwinge an der Sitzschiene anzulenken und das untere Teil der Gurtschloßbefestigung in Nähe der Gelenkverbindung zwischen Sitzschiene und Schwinge an der Schwinge anzulenken.

Weitere Vorteile und Merkmale der Erfindung ergeben sich aus den übrigen Ansprüchen sowie der nun folgenden Beschreibung mehrerer, nicht einschränkend zu verstehende Ausführungsbeispiele, die unter Bezugnahme auf die Zeichnung näher erläutert werden. In der Zeichnung zeigen:

Fig. 1   eine Seitenansicht eines Fahrzeugsitzes mit - zur Verdeutlichung - übergroß dargestellter, erfindungsgemäßer Gurtschloßbefestigung,

Fig. 2   die Gurtschloßbefestigung nach Fig. 1 in vergrößerter Darstellung,

Fig. 3   eine Seitenansicht einer Gurtschloßbefestigung in einer zweiten Ausführung und

Fig. 4   eine Seitenansicht eines hinteren Teils eines Fahrzeugsitzes mit einer dritten Ausführung einer Gurtschloßbefestigung.

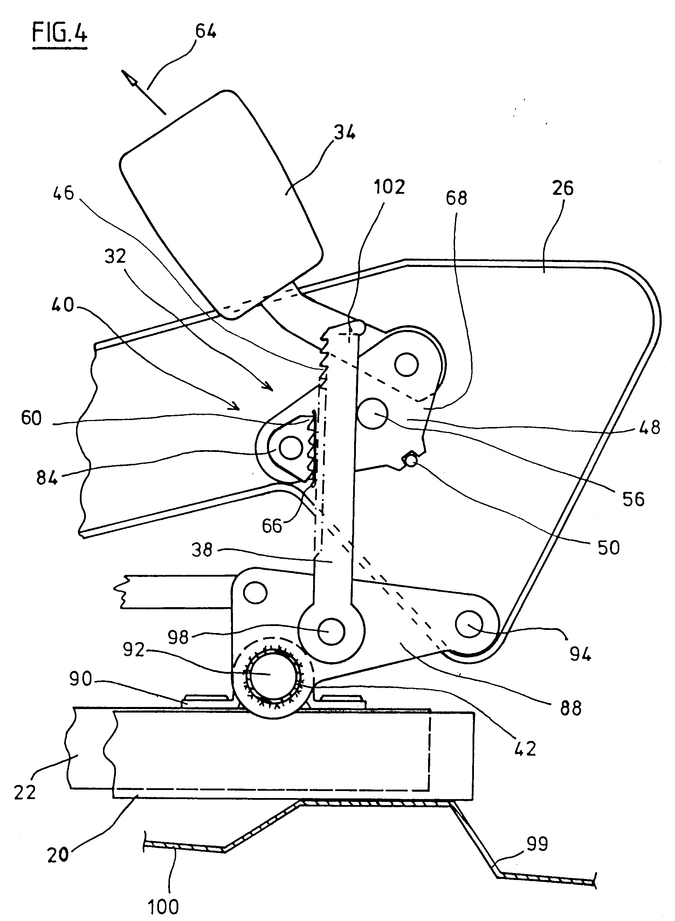

Der Fahrzeugsitz ist über eine Längsführung, die aus einer Bodenschiene 20 und einer Sitzschiene 22 besteht, mit einer Bodengruppe 100 (Fig. 4) verbunden. Oberhalb der Sitzschiene 22 befindet sich eine Einrichtung zur Höhen- und Neigungsverstellung 24, die an sich bekannt ist, so daß auf sie hier nicht näher eingegangen werden muß. Sie verbindet die Sitzschiene 22 mit einem Sitzträger 26, der zusammen mit einem Polsterkörper 28 und weiteren Teilen, beispielsweise einer Federung, eine Sitzfläche 30 ausbildet.

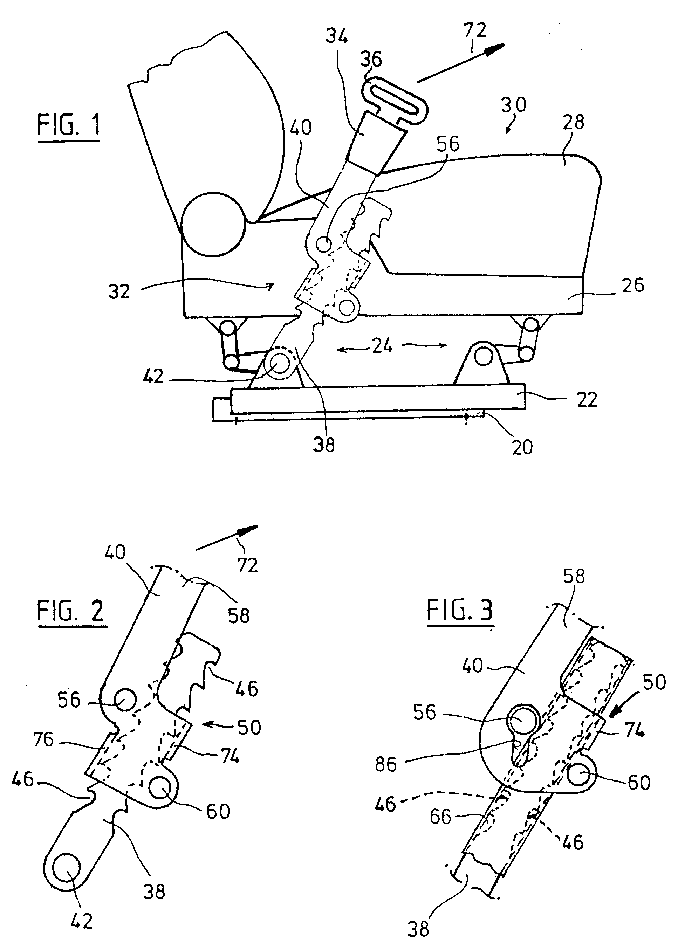

Im Ausführungsbeispiel nach den Figuren 1 und 2 ist eine Gurtschloßbefestigung 32 an ihrem unteren Endbereich an der Sitzschiene 22 angelenkt. Sie trägt an ihrem oberen Endbereich ein Gurtschloß 34, in das zur besseren Veranschaulichung ein Kupplungsstück 36 eines V-Sicherheitsgurtes eingesteckt ist. Dieses befindet sich in bekannter Weise seitlich neben der Sitzfläche 30 und an der tunnelseitigen Seite des Fahrzeugsitzes.

Die Gurtschloßbefestigung 32 setzt sich aus einem unteren, ersten Teil 38 und einem oberen, zweiten Teil 40 zusammen, die normalerweise frei gegeneinander verschiebbar sind. Das erste Teil 38 ist an seinem unteren Endbereich über eine Traverse 42, die die beiden Sitzseiten verbindet, an der Sitzschiene 22 angelenkt. In einer anderen Ausbildung (nicht dargestellt) ist der untere Endbereich über einen Achsstummel 42 an der Sitzschiene 22 angelenkt. Das erste Teil 38 ist als flaches Blechstanzteil ausgebildet und hat an seinen beiden Seiten ein Sägezahnähnliches Profil, durch das Rastbuchten 46 ausgebildet werden.

Das einstückige zweite Teil 40 ist über einen Achsstummel 56 am Sitzträger 26 angelenkt und hat einen oberen Bereich 58, mit dem das Gurtschloß 34 starr verbunden ist.

Das zweite Teil 40 hat zwei Führungsbacken 74, 76, von denen eine, die Führungsbacke 74, auf der anderen Seite des unteren Teils als der Achsstummel 56 liegt. Achsstummel 56 und Führungsbacke 74 liegen sich direkt gegenüber. Die andere Führungsbacke 76 befindet sich auf der gleichen Seite des ersten Teils 38 wie der Achsstummel 46 und liegt in Verlängerung des Bereichs 58 unterhalb des Achsstummels 56. Der Führungsbacke 76 liegt ein als Raststift ausgebildeter Rastvorsprung 60 gegenüber. Die Führungsbacke 74 übernimmt die Funktion eines Sicherungsstücks 50.

Greift eine Kraft im Sinne eines Pfeils 72, aber auch eine reine Zugkraft in Längsrichtung des ersten Teils 38 an, so wird ein Kippmoment der beiden Teile 38, 40 gegeneinander und um den Achsstummel 56 bewirkt. Ihm nähert sich dadurch die linke, verzahnte Seite des ersten Teils 38. Gleichzeitig wird die Führungsbacke 74 nach außen aufgeweitet und plastisch verformt. Dadurch kann auch der Raststift 60 in die gegenüberliegende Verzahnung des ersten Teils 38 eingreifen, so daß insgesamt eine Sicherung gegen Ausreißen und damit eine Blockierung erzielt ist.

Im Ausführungsbeispiel nach Fig. 3 übernimmt ein die Lageröffnung des Achsstummels 56 nach unten fortsetzender Schlitzbereich die Funktion des Sicherungsstücks 50. Der Führungsöffnung für den Achsstummel 56 liegen eine Führungsbacke 76 und ein Raststift 60 gegenüber. Der Bereich 58 befindet sich seitlich versetzt zum geradlinigen Verlauf des ersten Teils 38, das ähnlich wie im Ausführungsbeispiel nach Fig. 2 ausgeführt ist. Bei einer unfallbedingten Zugkraft tritt ein Kippmoment auf, der Achsstummel 56 wird in den engeren Spalt hineingepreßt, der Schlitz 86 weitet sich dabei auf, indem sich das umliegende Material plastisch verformt. Dadurch wird eine Verhakung erzielt, die durch den Achsstummel 56 und den Raststift 60 bewirkt wird. Der Schlitz 86 hat etwa die halbe lichte Breite wie die Führungsöffnung für den Achsstummel 56, in den der Schlitz unter Beibehaltung seines Querschnittes mündet.

Wie Fig. 3 zeigt, ist das erste Teil 38 im geführten Bereich mit einem Mantel 66 aus einem die Gleitbewegung unterstützenden, aber zerstörbaren Material, beispielsweise einem Kunststoff umhüllt.

Im Ausführungsbeispiel nach Fig. 4 ist der Sitzträger 26 über eine Schwinge 88 (und nicht über zwei Schwingen, wie Fig. 1) mit der Sitzschiene 22 verbunden. Die Schwinge 88 ist mit der Traverse 42, die als Rohrstück ausgebildet ist, verschweißt. Die Traverse 42 ist mittels eines Lagerbocks 90 auf der Oberseite der Sitzschiene 22 gelenkig gelagert. Die Traverse 42 verbindet die beiden Schwingen 88 der Sitzseiten und bildet einen Gelenkpunkt 92 zwischen Sitzschiene 22 und Schwinge 88. Der Gelenkpunkt 94 zwischen der Schwinge 88 und dem Sitzträger 26 befindet sich hinter (in Sitzrichtung) dem Gelenkpunkt 92, und zwar bei tiefster Position unterhalb und bei höchster Position der gezeigten Hinterkante des Sitzträgers 26 etwa im Winkel von 45° zur Sitzschiene 22 oberhalb des Gelenkpunktes 92. Im wesentlichen oberhalb der Gelenke 92, 94 ist das zweite Teil 40 mittels des Achsstummels 56 am Sitzträger 26 angelenkt und zusätzlich durch das Sicherungsstück 50, das als Schernase ausgebildet ist, am Sitzträger 26 fixiert. Am zweiten Teil 40 ist das Gurtschloß 34 an der einen Seite des Anlenkpunktes 56 im bereich 68 des Teils 48 befestigt, auf der anderen Seite ist ein separates Sperrteil 84 angelenkt, das die Zähne 60 aufweist, die durch einen zerstörbaren Mantel 66 abgedeckt sind. Zwischen diesem Sperrteil 84 und dem Achsstummel 56 ist das erste Teil 38 geführt, es hat ebenfalls Zähne, die die Rastmittel ausbilden und mit den Zähnen 60 in Eingriff gelangen können, wenn unfallbedingt das Sicherungsstück 50 durch einen Zug am Gurtschloß 34, der ein Verschwenken des Teils 48 bewirkt, abgeschert wird.

Das erste Teil 38 verläuft im wesentlichen quer zu den Schienen 20, 22 und ist in Nähe des Gelenkpunktes 92 an der Schwinge 88 bei 98 angelenkt. Dieser Gelenkpunkt 98 liegt bei etwa einem Drittel des Abstandes der Gelenkpunkte 92, 94 in Nähe des Gelenkpunktes 92. Seine Lage wird allgemein so gewählt, daß der Winkel, den das erste Teil 38 mit dem Sitzträger 26 einschließt, möglichst unabhängig von der Position zwischen Sitzträger 26 und Sitzschiene 22 und möglichst nahe einem rechten Winkel ist. Anders ausgedrückt soll der Gelenkpunkt 98 dieselbe Querbewegung (Bewegung parallel zu den Schienen 20, 22) ausführen wie der Sitzträger 26. Eine dennoch verbleibende, nicht auszugleichende Winkeländerung des unteren Teils 38 gegenüber dem oberen Teil 40 wird durch das von der Führung zwischen den Teilen 56 und 84 zugelassene Spiel aufgefangen.

Ist die Gurtschloßbefestigung 32 unfallbedingt blockiert, so steift sie das Gelenk 94 aus, die Gurtzugkraft wird über den hinteren Teil der Schwinge 88, den Lagerbock 90 und die Traverse 42 in die Sitzschiene 22 eingeleitet. Wie die Figuren 1 und 4 zeigen, befindet sich die Traverse 42 (bzw. der Gelenkpunkt 92) in einer gewissen Entfernung vom hinteren Ende der Sitzschiene 22. Weiterhin reicht die Sitzschiene 22 nicht - wie beim Stand der Technik üblich - über den rückwärtigen Endbereich des Sitzträgers 26 nach hinten hinaus. Die Schienen 20, 22 sind also kürzer (als beim Stand der Technik), wodurch die Fußfreiheit für Fondpassagiere verbessert wird. Die Bodenschiene 20 ist über eine hintere Konsole 99 mit der Bodengruppe 100 verbunden. Diese Konsole 99 befindet sich - unabhängig von der Verschiebung der Schienen 20, 22 gegeneinander - stets in der Nähe der Traverse 42. Dadurch wird eine günstige Einleitung in die und Übertragung der Gurtzugkräfte durch die Schienen 20, 22 erreicht. Beim Stand der Technik werden die Gurtzugkräfte in einen hinten frei auskragenden Endbereich der Bodenschiene 20 eingeleitet.

Auch der türseitige Gurtpunkt wird unmittelbar am Sitzträger 26 befestigt. Er kann entweder über eine entsprechende Anordnung der zwei Teile 38, 40 abgesichert werden, oder es wird auf eine derartige, unfallbedingt eingreifende Kraftübertragung verzichtet. Letztere Lösung kann man bei ausreichend solider Ausbildung der einzelnen Teile (26, 88 bis 94) wählen, weil die Gurtzugkräfte am türseitigen Gurtpunkt geringer sind als am Gurtschloß 34. Die türseitige Gurtbefestigung erfolgt dann im Punkt 102.

Schließlich ist noch zu berücksichtigen, daß die Höhen- oder Neigungsverstellung 24 ihrerseits eine Ein- und Feststellvorrichtung hat. Sie unterstützt die Übertragung der Gurtzugkräfte vom Sitzträger 26 in die Sitzschiene 22. Wirkt sie beispielsweise auf die Traverse 42, so hält sie deren Winkelposition in einem gewissen Maße fest und verhindert zusätzlich eine Schwenkbewegung um den Gelenkpunkt 92, wobei ein Teilstück der Traverse 42 als Torsionsstab wirkt. Ist die Verstellvorrichtung dem Gelenkpunkt 94 zugeordnet, so kann ein erheblicher Anteil einer unfallbedingten Gurtzugkraft auch über dieses Gelenk 94 auf die Sitzschiene übertragen werden.

In der Ausbildung nach Fig. 4 ist die Gurtschloßbefestigung mechanisch geschützt untergebracht. Dadurch ist die Gefahr, daß die Teile 38, 40 irgendwie beschädigt werden und dadurch bei einem Unfall nicht mehr ordnungsgemäß arbeiten, gering.

**Patentansprüche**

1. Fahrzeugsitz
   - mit einer Längsführung bestehend aus mindestens einer Bodenschiene (20) und einer Sitzschiene (22),
   - mit einer Einrichtung zur Höhen- oder Neigungsverstellung (24) seiner Sitzfläche (30),
   - mit einer nahe der Mittellängsachse des Fahrzeugs plazierten Gurtschloßbefestigung (32), die ein erstes Teil (38) und ein zweites, mit einem Gurtschloß (34) verbundenes, an einem Sitzträger (26) angeordnetes Teil (40) aufweist, wobei das erste Teil (38) frei verschiebbar in einer vom zweiten Teil (40) ausgebildeten Längsführung geführt ist und periodisch angeordnete, sägezahnähnliche Rastbuchten (46) hat, denen ein am zweiten Teil (40) angeordneter Rastvorsprung (60) zugeordnet ist, und
   - mit einem dem zweiten Teil (40) zugeordneten Sicherungsstück (50), das normalerweise den Eingriff des Rastvorsprungs (60) in die zugeordneten Rastbuchten (46) verhindert, aber hei einer unfallbedingten Gurtkraft überwunden wird, so daß der Rastvorsprung (60) in die Rastbuchten (46) eingreift und das zweite Teil (40) gegenüber dem ersten Teil (38) blockiert ist,

   dadurch gekennzeichnet, dap die Einrichtung zur Höhen- oder Neigungsverstellung (24) zwischen dem Sitzträger (26) der Sitzfläche (30) und der Sitzschiene (22) angeordnet ist, daß das erste Teil (38) an der Sitzschiene (22) oder an einer mit ihr gelenkverbundenen Schwinge (88) angelenkt ist und zwischen dem Rastvorsprung (60) und einem Achsstummel (56) hindurchläuft, und daß das zweite Teil (40) um den Achsstummel (56) schwenkbar am Sitzträger (26) angelenkt ist.

2. Fahrzeugsitz nach Anspruch 1, dadurch gekennzeichnet, daß die Längsführung zwischen den beiden Teilen (38, 40) gekrümmt, insbesondere dem kinematischen Weg der Höhen- oder Neigungsverstellung (24) angepaßt verläuft.

3. Fahrzeugsitz nach Anspruch 1 oder 2, dadurch gekennzeichnet, daß in der Führung der Teile (38, 40) ein oberer Endanschlag für das erste, untere Teil (38) im führenden zweiten, oberen Teil (40) vorgesehen ist.

4. Fahrzeugsitz nach einem der Ansprüche 1 bis 3, dadurch gekennzeichnet, daß das Sicherungsstück (50) ein plastisch verformbarer Bereich des oberen Teils (40) ist, das insbesondere als Führungsbacke (74) ausgeführt ist.

5. Fahrzeugsitz nach einem der Ansprüche 1 bis 4, dadurch gekennzeichnet, daß die Rastbuchten (46) durch einen die Gleitbewegung fördernden, bei Überlast zerstörbaren Mantel (66) umhüllt sind.

6. Fahrzeugsitz nach einem der Ansprüche 1 bis 5, dadurch gekennzeichnet, daß das erste Teil (38) auch auf seiner anderen, dem Achsstummel (56) zugekehrten Seite periodisch angeordnete, sägezahn-ähnliche Rastbuchten hat, denen der Achsstummel (56) als Rastelement zugeordnet ist.

7. Fahrzeugsitz nach einem der Ansprüche 1 bis 6, dadurch gekennzeichnet, daß das zweite Teil (40) aus einem mit dem Gurtschloß (34) verbundenen Tragteil (48), das um den Achsstummel (56) schwenkbar am Sitzträger (26) angelenkt ist, und mindestens einem weiteren, die Rastvorsprünge (60) tragenden Sperrteil (84) zusammengesetzt ist, die über ein Gelenk miteinander verbunden sind, oder daß das obere Teil (40) einstückig ausgeführt ist und an seinen Seitenkanten die Rastvorsprünge (60) ausbildet.

8. Fahrzeugsitz nach einem der Ansprüche 1 bis 7, dadurch gekennzeichnet, daß das zweite Teil (40) mittels des Sicherungsstücks (50) drehfest am Sitzträger (26) fixiert ist.

9. Fahrzeugsitz nach einem der Ansprüche 1 bis 8, dadurch gekennzeichnet, daß das erste Teil (38) in möglichst geringer Entfernung von einer Traverse (42) an der Sitzschiene (22) bzw. an der mit ihr gelenkverbundenen Schwinge (88) angelenkt ist.

10. Fahrzeugsitz nach einem der Ansprüche 1 bis 9, dadurch gekennzeichnet, daß die Bodenschiene (20) in einem hinteren Befestigungsbereich (Konsole 99) mit einer Bodengruppe (100) verbunden ist und daß sich die Traverse (42) stets vor oder über, jedenfalls nicht hinter der Konsole (99) befindet.

## Claims

1. Vehicle seat
   - with a longitudinal guide device consisting of at least one floor rail (20) and one seat rail (22),
   - with a device for adjustment of height or inclination (24) of its seat surface (30),
   - with a belt lock attachment (32) arranged in the vicinity of the longitudinal centre line of the vehicle and comprising a first part (38) and a second part (40) connected with a belt lock (34) and linked to a seat carrier (26), wherein the first part (38) can slide freely in a longitudinal guide arrangement formed by the second part (40) and is provided with periodically arranged, sawtooth-like stop notches (46) interacting with a stop projection (60) arranged at the second part (40), and
   - with a securing device (50) attached to the second part (40), which securing device (50) in the normal position prevents the stop projection (60) to enter into the neighboring stop notches (46), but which securing device (50) in case of a force affecting the belt during an accident is overridden, so that the stop projection (60) engages in the stop notches (46) and a movement of the second part (40) in relation to the first part (38) is prevented,

   characterized in that the device for adjustment of height or inclination (24) ist arranged between the seat carrier (26) of the seat surface (30) and the seat rail (22), that the first part (38) is linked either to the seat rail (22) or to a rocker (88) linked with the seat rail (22) and extends between the stop protection (60) and an axle journal (56), and that the second part (40) and the axle journal (56) are swingingly attached to the seat carrier (26).

2. Vehicle seat according to claim 1, characterized in that the longitudinal guide device between the two parts (38, 40) is curved, particularly so that it is follows the kinematic path of the device for adjustment of height or inclination (24).

3. Vehicle seat according to claim 1 or 2, characterized in that in the guide arrangement for the two parts (38, 40) an upper end stopper for the first, lower part (38) is provided in the guiding second upper part (40).

4. Vehicle seat according to one of the claims 1 to 3, characterized in that the security device (50) is an area of the upper part (40) which can be plastically deformed and, particularly, is executed as a guide jaw (74).

5. Vehicle seat according to one of the claims 1 to 4, characterized in that the stop notches (46) are surrounded by a sheathing (66) which promotes the sliding movement and can be destroyed in case of overload.

6. Vehicle seat according to one of the claims 1 to 5, characterized in that the first part (38) has periodically arranged, sawtooth-like stop notches on its other side facing the axle journal (56), too, and that the axle journal (56) is provided as a stop element for these stop notches.

7. Vehicle seat according to claims 1 to 6, characterized in that the second part (40) is composed of a carrier part (48) which is connected to the belt lock (34), is attached to the seat carrier (26) and can be swivelled arround the axle journal (56), and at least one additional blocking part (84) carrying the stop protections (60), which parts (48, 84) are interconnected by means of a linkage, or that the upper part (40) is executed in one piece on which the stop projections (60) are formed at the side edges.

8. Vehicle seat according to one of the claims 1 to 7, characterized in that by means of the securing device (50), the second part (40) is affixed to the seat carrier (26) so that it cannot be turned.

9. Vehicle seat according to one of the claims 1 to 8, characterized in that the first part (38) is linked to the seat rail (22) or the rocker (8) connected thereto by means of a linking, namely at the shortest possible distance from a traverse piece (42).

10. Vehicle seat according to one of the claims 1 to 9, characterized in that the floor rail (20) is connected to a floor group (100) in a rear attachment area (consol 99), and that the traverse part (42) is always located in front of or above the consol (99), but never behind it.

**Revendications**

1. Siège du véhicule
   - muni d'un guidage longitudinal comprenant au moins une glissière de fond (20) et une glissière de siège (22),
   - muni d'un dispositif ajustant les hauteurs et inclinaisons 24) de sa surface de siège (30),
   - muni d'un ancrage pour la fermeture d'une ceinture de sécurité (32) localisé à proximité de l'axe central longitudinal du véhicule composé d'un premier élément (38) et d'un deuxième élément (40) relié à une fermeture de ceinture (34) et attaché à un support de siège (26). Le premier élément (38) est librement coulissant dans un guidage longitudinal formé par le deuxième élément (40) et dispose d'anses s'enclenchant périodiquement ressemblant à une denture (56) auxquelles est assignée une saillie d'encliquetage se trouvant sur le deuxième élément (40) et
   - muni d'une pièce de sécurité (50) assignée au deuxième élément (40) qui normalement empêche l'insertion de la saillie d'encliquetage (60) dans les anses d'encliquetage (46) lui assignées, étant toutefois surpassée quand s'exerce une force de traction sur la ceinture - provoquée par un accident, de manière à ce que la saillie d'encliquetage (60) s'enclenche dans les anses d'encliquetage (46) ainsi que le deuxième élément (40) est bloqué par rapport au premier élément (38).

   Le siège du véhicule est caractérisé, en plus, par le fait que le dispositif permettant l'ajustage en hauteurs et inclinaisons (24) est monté entre le support de siège (26) la surface de siège (30) et la glissière de siège (22), de manière à ce que le premier élément (38) s'articule sur la glissière de siège (22) ou sur une coulisse (88) solidaire d'elle par une articulation passant entre la saillie d'encliquetage (60) et un tronçon d'axe (56) et que le deuxième élément (40) s'articule en pivotant autour le tronçon d'axe (56) sur le support de siège (26).

2. Siège de véhicule selon la revendication 1, caractérisé par le fait que le guidage longitudinal entre les deux éléments (38,40) est courbé, passant adapté au chemin cinématique de l'ajustage en hauteur et en inclinaison (24).

3. Siège de véhicule selon revendication 1 ou 2, caractérisé par le fait que pour le guidage des éléments (38,40) sera prévue une butée terminale supérieure pour le premier élément arrière (38) à l'intérieur du deuxième élément guidant (40).

4. Siège de véhicule selon l'une des revendications 1 à 3, caractérisé en ceci que la pièce de sécurité (50) est un secteur plastiquement déformable de l'élément supérieur (40) qui est configuré tout particulièrement en tant que coulisse de guidage (74).

5. Siège de véhicule caractérisé par l'une des revendications 1 à 4, selon lesquelles les anses d'encliquetage (46) sont armées d'une enveloppe (66) favorisant le mouvement coulissant destructible en cas de surcharge.

6. Siège de véhicule selon l'une des revendications 1 à 5, caractérisé par ceci que le premier élément (38) dispose d'anses d'encliquetage périodiquement installées et similiaires à une denture et tournées vers le tronçon d'axe (56) auxquelles le tronçon d'axe (56) est assigné en tant qu'élément d'encliquetage.

7. Siège de véhicule selon l'une des revendications 1 à 6 dont une qualité caractéristique est que le deuxième élément (40) est composé d'un support (48) relié à la fermeture de la ceinture (34) s'articulant en pivotant autour du tronçon d'axe (56) étant fixé au support de siège (26), étant composé, en plus, d'une autre pièce de blocage (84) supportant les saillies d'encliquetage (60) ou alors, comme alternative, que l'élément supérieur (40) soit configurée en une seule pièce configurant sur ses bords latéraux les saillies d'encliquetage (60).

8. Siège de véhicule selon l'une des revendications 1 à 7, caractérise en ceci que le deuxième élément (40) résistant à la torsion sera fixé au support de siège (26) au moyen de pièces de sécurité (50).

9. Siège de véhicule selon l'une des revendications 1 a à, caractérisé en ceci que le premier élément (38) s'articule dans une distance aussi réduite que possible d'une traverse (42) sur une glissière de siège (22) voire sur la coulisse (88) relié avec celle-ci par articulation.

10. Siège de véhicule selon l'une des revendications 1 à 9 caractérisé en ceci que le rail de fond (20) est reliè au châssis (100) dans un secteur arrière de fixation (console 99) et que la traverse (42) se trouve toujours devant ou au dessus mais jamais derrière la console (99).

FIG. 1

FIG. 2

FIG. 3

# FIG.4